# FASCICULE DE BREVET EUROPEEN

(11) **EP 3 597 976 B1**
(45) Date de publication et mention de la délivrance du brevet: **23.03.2022**
(21) Numéro de dépôt: 19187117.7
(22) Date de dépôt: 18.07.2019
(51) Int. Cl.: F16L 19/06, F16L 27/08

(54) **CONNECTEUR FLUIDIQUE AISEMENT MANOEUVRABLE**
LEICHT HANDHABBARER FLUIDANSCHLUSS
EASILY MANOEUVRABLE FLUID CONNECTOR

(30) Priorité: 20.07.2018 FR 1856740
(43) Date de publication de la demande: 22.01.2020
(73) Titulaire: Commissariat à l'Energie Atomique et aux Energies Alternatives, 75015 Paris (FR)
(72) Inventeur: DECHELLE, Christian, 38054 GRENOBLE Cedex 09 (FR); VILLEDIEU, Eric, 38054 GRENOBLE Cedex 09 (FR)
(74) Mandataire: Marks & Clerk France

(56) Documents cités:
- WO-A1-84/00594
- WO-A1-2013/152396
- FR-A- 644 520

## Description

L'invention concerne un connecteur fluidique aisément manœuvrable. Les réseaux de fluide sous pression sont présents dans de nombreux domaines. Les fluides transportés par ces réseaux peuvent être des gaz, des liquides, des fluides diphasiques. Des particules solides peuvent également être en suspension dans ces fluides. Les réseaux nécessitent des connexions entre différents canaux. Un connecteur fluidique permet de mettre en communication deux canaux ou de réaliser une dérivation dans un canal. Il est possible de réaliser une connexion de façon définitive en collant ou en soudant deux canaux entre eux. Cependant, il peut être nécessaire de permettre le démontage de la connexion par exemple pour raccorder une source de fluide au réseau et permettre le changement de cette source. Plus simplement, pour assurer l'entretien du réseau, le montage et le démontage d'une connexion peuvent être nécessaires.

Le montage et le démontage d'une connexion peut être réalisé par un opérateur. Cependant, dans certains environnements, l'accès peut être impossible, notamment à cause de l'accessibilité, du fait de la présence de nombreuses tuyauteries enchevêtrées ou à cause d'un environnement dangereux pour l'opérateur, notamment dans le domaine chimique ou nucléaire.

De façon classique, il est possible de mettre en œuvre un connecteur raccordant deux canaux alignés. Le verrouillage est réalisé au moyen à bague extérieure à vis. Un tel connecteur est par exemple décrit dans le document WO 2012/131049 A1. La manœuvre de la bague peut être impossible du fait de la présence d'autres dispositifs dans son voisinage.

D'autres connecteurs fluidiques sont décrits dans les documents : WO 84/00594 A1 et FR 644 520 A.

Il est possible de prévoir des connecteurs opérables à distance (télé opérables). On connait par exemple des raccords à baïonnette ou à verrouillage développés par la société Stâubli dont le siège social est situé en Suisse : Poststrasse 5, 8808 Pfâffikon SZ. Les raccords de type RBE TM sont par exemple prévus pour l'environnement nucléaire et un outillage adapté permet de les manipuler à distance. Ce type de raccord n'existe que pour des petits diamètres de canalisation, typiquement inférieurs à 20mm.

Pour raccorder des canalisations de plus gros diamètres, il est possible de mettre en œuvre des brides pressant un joint d'étanchéité et maintenues en pression au moyen de plusieurs vis entourant le joint. Il existe également des brides à collier avec un serrage réalisé au moyen d'une chaine entourant les brides. Ce type montage à bride nécessite nécessitent un espace disponible important autour des brides pour le montage et le démontage de celles-ci. De plus, dans le cas où une télé opération est nécessaire, la mise en place d'outils de maintenance peut être compliquée.

L'invention vise à pallier tout ou partie des problèmes cités plus haut en proposant un connecteur fluidique aisément connectable et déconnectable

A cet effet, l'invention a pour objet un connecteur fluidique selon les revendications.

L'invention sera mieux comprise et d'autres avantages apparaîtront à la lecture de la description détaillée de modes de réalisation donnés à titre d'exemple, description illustrée par le dessin joint dans lequel :
les figures 1a et 1b représentent respectivement et à distance deux parties d'un exemple de connecteur fluidique selon l'invention ;
les figures 2a, 2b, 2c, 2d, 2e et 2f représentent, accouplées, plusieurs variantes d'un connecteur fluidique selon l'invention ; les variantes des figures 2d et 2e ne sont pas revendiquées ;
la figure 3 représente en perspective coupée partiellement le connecteur fluidique dans la position accouplée de la figure 2a ;
la figure 4 représente une autre vue en perspective du connecteur fluidique dans la position accouplée de la figure 2a ;
les figures 5 et 6 représentent deux variantes d'un connecteur fluidique selon l'invention ;
la figure 7 représente un connecteur fluidique avec un outil permettant une télé opération de l'accouplement et du désaccouplement du connecteur.

Par souci de clarté, les mêmes éléments porteront les mêmes repères dans les différentes figures.

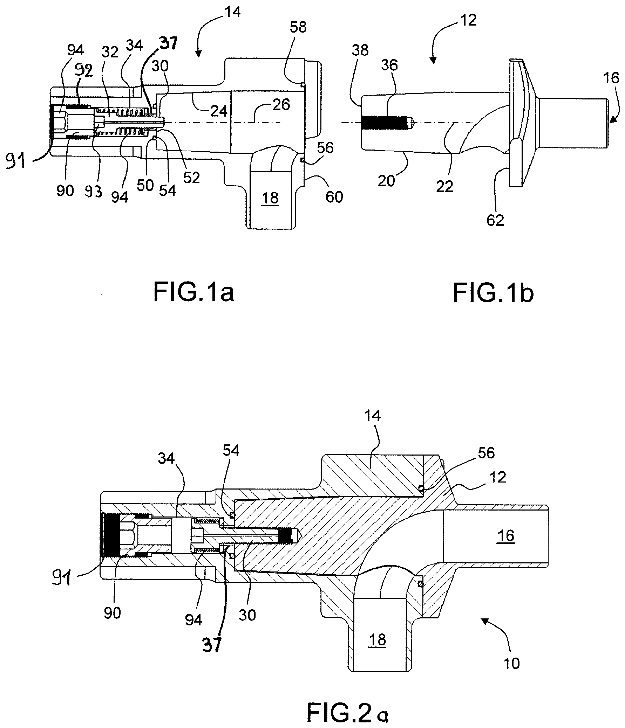

L'invention se rapporte à un connecteur fluidique 10 comprenant deux parties 12 et 14 pouvant être accouplées. La figure 1a représente la partie 14 et la figure 1b représente la partie 12 d'une première variante d'un connecteur fluidique selon l'invention. Les figures 1a et 1b représentent les deux parties à distance l'une de l'autre, c'est-à-dire connecteur désaccouplé. La première partie 12 comprend un canal 16 et la seconde partie 14 comprend un canal 18. Lorsque les deux parties 12 et 14 du connecteur 10 sont accouplées, les deux canaux 16 et 18 communiquent à l'intérieur du connecteur 10. Le connecteur fluidique 10 peut être utilisé pour conduire tout type de fluide, gazeux, liquide ou diphasique circulant dans les canaux 16 et 18. Des particules solides peuvent également être en suspension dans le fluide.

Dans la première variante, le positionnement des deux parties 12 et 14 est réalisé au moyen de surfaces tronconiques. Plus précisément, la partie 14 parties comprend une surface tronconique mâle 20 de révolution autour d'un axe 22 et la partie 16 comprend une surface tronconique femelle 24 de révolution autour d'un axe 26. Les deux surfaces tronconiques 20 et 24 sont complémentaires. Lorsque les deux surfaces tronconiques 20 et 24 sont emmanchées l'une dans l'autre, les axes 22 et 26 sont confondus. Les mêmes paramètres géométriques définissent les deux surfaces tronconiques 20 et 22, elles possèdent notamment le même angle au sommet et s'étendent toutes deux sur une distance commune le long de leur axe respectif par rapport à leur sommet qui sont donc confondus une fois emmanchées.

Lorsque les deux surfaces tronconiques 20 et 24 sont emmanchées l'une dans l'autre les canaux 16 et 18 communiquent dans le connecteur 10.

La partie 14 comprend un mécanisme de verrouillage selon l'axe 26 de la surface tronconique femelle configuré pour exercer un effort sur la partie 12 afin d'assurer le maintien en position des deux parties 12 et 14 entre elles lorsque les deux parties sont accouplées.

Dans l'exemple représenté, le mécanisme de verrouillage comprend une vis 30 s'étendant selon l'axe 26 de la surface tronconique femelle 24. La vis 30 comprend une tête 32 s'appuyant sur un le fond d'un lamage 34 de la seconde partie14. Par ailleurs, un taraudage 36 est réalisé dans la partie 12. Le taraudage 36 s'étend le long de l'axe 22. Le taraudage 36 est réalisé dans une extrémité axiale 38 de la partie 12 formant la section de plus petit diamètre de la surface tronconique 20. Le taraudage 36 est complémentaire du filetage de la vis 30. La vis 30 traverse une ouverture 37 réalisée dans la partie 14. La vis 30 traverse une face plane 52 de la partie 14 formant l'extrémité axiale de plus petit diamètre de la surface tronconique femelle 24. Après emmanchement des deux surfaces tronconiques 20 et 24, le serrage de la vis 30 dans le taraudage 36 permet d'exercer un effort en tirant sur la partie 12 pour verrouiller l'emmanchement des deux surfaces tronconiques 20 et 24 l'une dans l'autre.

La figure 2a représente les deux parties 12 et 14 accouplées. Dans cette position, la vis 30 exerce une traction sur la partie 12 orientée pour maintenir le connecteur 10 accouplé et les deux surfaces tronconiques 20 et 24 sont emmanchées l'une dans l'autre.

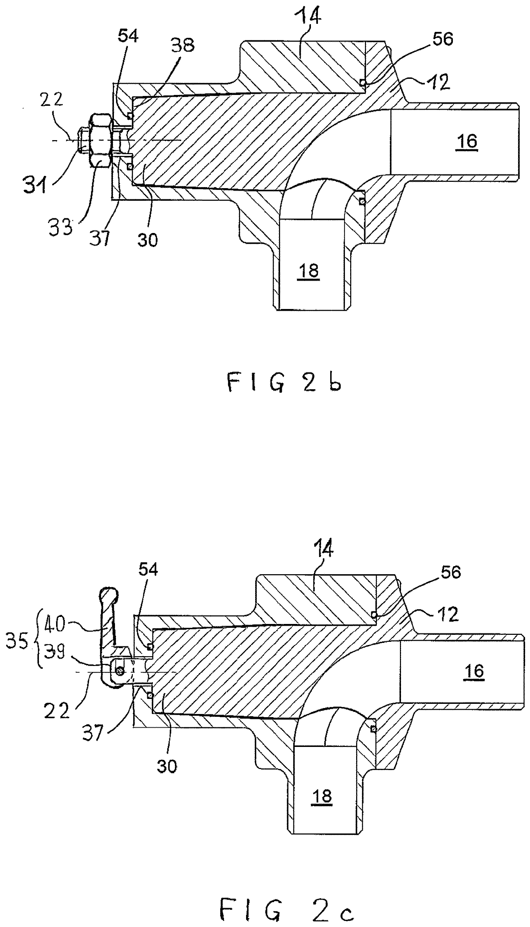

D'autres mécanismes de traction alternatifs au système vis-écrou présenté sur la figure 2a peuvent être envisagés. Comme par exemple représenté sur la figure 2b, il est par exemple possible de prolonger la partie 12 par une tige filetée pleine 31 s'étendant selon l'axe 22 à partir de l'extrémité axiale 38. La tige filetée 31 traverse l'ouverture 37. Un écrou 33, distinct des deux parties 12 et 14, prenant appui sur la partie 14 peut coopérer avec la tige filetée 31 pour exercer l'effort attendu. Alternativement encore, comme par exemple représenté sur la figure 2c, un système de grenouillère 35 prenant appui sur la partie 14 peut également exercer une traction sur la partie 12. La grenouillère 35 comprend une tige 39 s'étendant selon l'axe 22 à partir de l'extrémité axiale 38. La tige 39 traverse l'ouverture 37. Une manette 40 est en liaison pivot avec la tige 39. La manette 40 possède une forme excentrique par rapport à l'axe de la liaison pivot configurée pour prendre appui contre la partie 14 et tirer sur la tige 39 lors de la rotation de la manette 40.

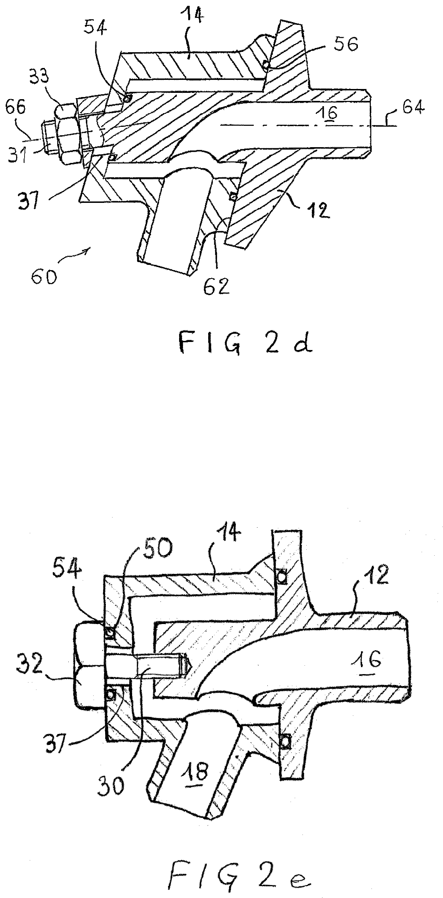

La figure 2d représente un connecteur fluidique 60 comprenant deux parties également repérées 12 et 14. Sur la figure 2d, les deux parties 12 et 14 sont accouplées. A la différence du connecteur 10, le positionnement des deux parties 12 et 14 du connecteur 60 ne se fait pas au moyen d'un emmanchement conique. Le positionnement du connecteur 60 se fait au moyen d'un appui plan 62 entre les deux parties 12 et 14. L'appui plan 62 permet de fixer trois degrés de liberté de la partie 14 par rapport à la partie 12. Le maintien en position est assuré, comme dans la variante de la figure 2b, au moyen d'une tige filetée 31 prolongeant la partie 12 et coopérant avec l'écrou 33. Dans le connecteur 60, il est également possible de mettre en œuvre tout autre moyen assurant le maintien en position des deux parties 12 et 14, notamment la vis 30 coopérant avec un taraudage 36 réalisé dans la partie 12 ou la grenouillère 35. L'appui plan 62 permet un réglage de la position relative des deux parties 12 et 14 dans le plan de l'appui plan 62 avant verrouillage de la position des deux parties 12 et 14 en serrant l'écrou 33. Le canal 16 s'étend selon un axe 64. L'appui plan 62 peut être perpendiculaire à l'axe 62 ou incliné comme représenté sur la figure 2d. Par ailleurs, la tige filetée 31 s'étend selon un axe 66 qui peut être confondu avec l'axe 64 ou désaxé comme représenté sur la figure 2d. Une disposition confondue des axes 64 et 66 permet une plus grande latitude de positionnement des deux parties 12 et 14 autour des axes 64-66 confondus. Le choix de l'orientation relative de l'appui plan 62 et des axes 64 et 66 se fait notamment en fonction du volume dont on dispose pour placer le connecteur 60.

De façon plus générale, le positionnement réalisé au moyen d'un emmanchement conique permet de supprimer cinq degrés de liberté par obstacle. Le sixième degré de liberté, permettant l'immobilisation des deux parties 12 et 14 entre elles, est supprimé par adhérence lors du serrage du mécanisme de verrouillage. Par ailleurs, dans la variante de la figure 2d, l'appui plan 62 permet de supprimer trois degrés de liberté par obstacle. Les trois autres degrés de liberté sont supprimer pas adhérence lors du serrage du mécanisme de verrouillage. Toute autre combinaison de suppression des degrés de liberté soit par obstacle soit par adhérence est également possible dans le cadre de l'invention.

Dans les différentes variantes décrites précédemment, les mécanismes de verrouillage possèdent un élément traversant l'orifice 37. L'orifice 37 n'est pas utilisé pour la circulation du fluide circulant dans le connecteur. Autrement dit, le fluide ne traverse aucune section de l'orifice 37. Ainsi, la position et la forme de l'orifice 37 est libérée de toute contrainte liée au passage du fluide, notamment en terme de section de passage. L'orifice 37 n'est utilisé que pour faire traverser un tirant, en l'occurrence : la tige 39, la tige filetée 31 ou la vis 30.Le tirant occupe avantageusement l'ouverture 37 au jeu fonctionnel près. Dans les variantes à surfaces tronconiques, le jeu fonctionnel permet au tirant de traverser l'ouverture 37 en tenant compte des tolérances des surfaces tronconiques. Dans la variante de la figure 2d, le jeu fonctionnel peut être plus important pour permettre le réglage de la position des deux parties 12 et 14 en autorisant un déplacement relatif des deux parties sur l'appui plan 62.

Dans les variantes à surfaces tronconiques, le mécanisme de verrouillage exerce avantageusement son effort sur le centre de l'extrémité axiale 38. Ce centrage de l'effort permet de mieux répartir l'effort sur l'ensemble des surfaces tronconiques. Dans la partie12, le canal 16 s'étend selon l'axe 22. Dans la partie 14, le canal 18 s'étend de façon désaxé par rapport à l'axe 26. Autrement dit, le canal 18 ne traverse pas la face plane 52 ce qui libère de l'espace pour permettre au mécanisme de verrouillage d'exercer son effort par le centre de la face 52. L'effort exercé par le mécanisme de verrouillage est centré par rapport aux surfaces tronconiques 20 et 24. De plus, cet effort peut être exercé par une tige ou une vis n'occupant pas d'espace en périphérie radiale du connecteur fluidique 10.

Le mécanisme de verrouillage peut alternativement comprendre plusieurs tirants permettant de tirer sur la partie 12.

Dans les variantes représentées sur les figures 2a, 2b, 2c et 2d, le joint 54 isole les canaux 16 et 18 de l'orifice 37. Alternativement, l'orifice 37 peut être baigné dans le fluide circulant dans les canaux 16 et 18 comme représenté sur la figure 2e. Cette variante peut présenter un intérêt, par exemple lorsque le fluide possède des propriétés lubrifiantes utilisées pour le montage de la vis 30. Dans cette variante, la vis 30 est représentée de façon simplifiée et il est bien entendu possible de la remplacer par la vis apparaissant sur les figures 1a et 2a. Le joint 54 est ici pressé entre la partie 14 et la tête 32 de la vis 30. La gorge 50 peut être réalisée dans la partie 14 comme représenté sur la figure 2e ou dans la tête 32 de la vis 30. Cette position du joint 54 peut également être mise en œuvre dans les variantes à grenouillère où à tige filetée des figures 2b, 2c et 2d.

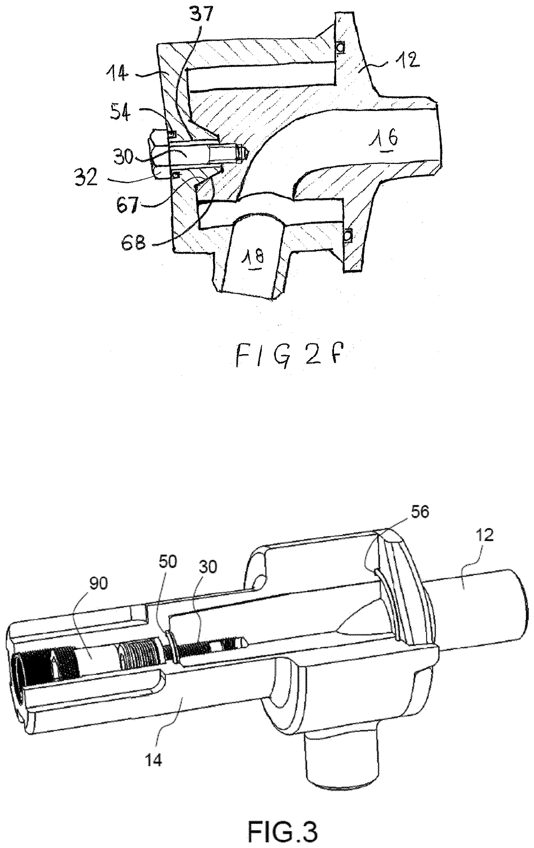

Dans la variante représentée sur les figures 1a, 1b et 2a, l'emmanchement conique se fait au moyen d'une surface tronconique mâle réalisée dans la partie 12 et d'une surface tronconique femelle réalisée dans la partie 14. En variante, comme représenté sur la figure 2f, l'inverse est également possible. Une surface tronconique mâle 67 est réalisée dans la partie 14 et une surface tronconique femelle 68 complémentaire de la surface tronconique mâle 67 est réalisée dans la partie 12. L'orifice 37 peut s'étendre à l'intérieur de la surface tronconique mâle 67 selon l'axe de la surface tronconique mâle 67 confondu avec l'axe de la surface tronconique 68 afin que l'effort exercé par la vis 30 soit centré par rapport à l'emmanchement conique. L'effort peut également être exercé par la grenouillère 35 ou par l'écrou 33 vissé dans la tige filetée 31. Sur la figure 2f, le joint 54 est disposé sous la tête 32 de la vis 30. Le joint 54 peut être disposée ailleurs, et notamment entre les deux surfaces tronconiques 67 et 68.

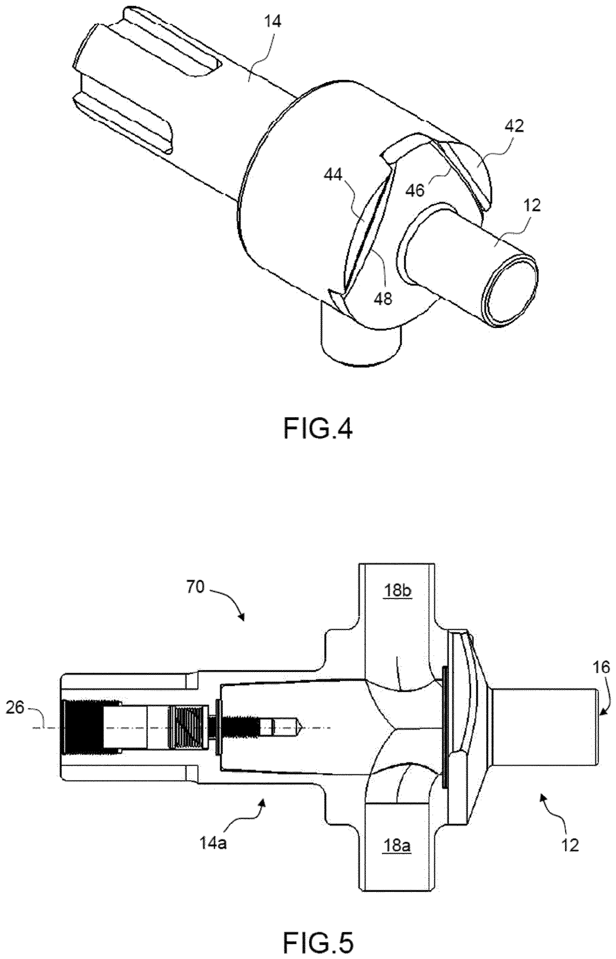

La figure 3 représente en perspective coupée partiellement le connecteur 10 dans la position accouplée de la figure 2 et la figure 4 représente une autre vue en perspective du connecteur fluidique toujours dans la position accouplée de la figure 2. Dans le mode de réalisation représenté, les deux surfaces tronconiques 20 et 24 sont de révolution chacune autour de leur axe respectif 22 et 26. Afin de maitriser l'orientation relative des deux parties 12 et 14 autour des axes 22 et 26 une fois confondus, le connecteur 10 comprend un ensemble de butées angulaires. Par exemple la partie 14 comprend une ou plusieurs excroissances 42 et 44 sur lesquelles viennent prendre appui des méplats 46 et 48 réalisés dans la partie 12. Toute autre forme de butées est bien entendu possible dans le cadre de l'invention.

Il est possible de se passer de l'ensemble de butées, par exemple en réalisant des surfaces tronconiques ne s'appuyant pas sur des cercles. Par exemple une surface tronconique comprenant au moins une surface plane inclinée par rapport à leur axe respectif permet de maitriser l'orientation relative des parties 12 et 14 autour des axes 22 et 26 lors de l'accouplement du connecteur 10. De façon plus générale, toute surface tronconique formée d'une portion de cône dont la génératrice s'appuie sur une courbe non circulaire permet de maitriser l'orientation des parties 12 et 14 entre elles.

La mise en œuvre de surfaces tronconiques de révolution présente cependant un avantage due à la symétrie de l'emmanchement autour de l'axe 26. Cette symétrie permet de conserver l'effort exercé par le mécanisme de verrouillage parfaitement selon l'axe 26, évitant ainsi tout risque de déformation lorsque l'effort est exercé. De plus, la réalisation de surfaces tronconiques de révolution est beaucoup plus aisée, notamment par usinage que la réalisation de surfaces tronconiques qui ne seraient pas de révolution.

Parmi les surfaces tronconiques de révolution est possible de mettre en œuvre, des surfaces appelées « cônes morses » dont la conicité est voisine de 5% en fonction de ses dimensions. On rappelle que la conicité est la tangente du demi-angle au sommet du cône. Les cônes morses sont principalement utilisés dans les machines-outils pour assurer l'emmanchement d'outils sur la broche de la machine-outil. Les cônes morses assurent un très bon centrage et présentent une adhérence importante. Plus précisément, même si l'effort exercé par la vis 30 est relâché, l'emmanchement assure le maintien en position des deux parties 12 et 14 accouplées.

Il est bien sûr possible de mettre en œuvre d'autres types de cônes. A titre d'exemple, on peut citer le cône dit « métrique » qui est, quant à lui, défini par une conicité égale à 5%. Son adhérence est également très importante. Le cône standard américain présente une conicité de 1/24, soit 29,16%. Le centrage est moins précis et l'adhérence très faible contrairement aux cônes morses ou métriques. En mettant en œuvre le cône standard américain, le maintien de l'effort exercé par la partie 14 sur la partie 12 est nécessaire tant que le connecteur 10 est accouplé. Avec une conicité de l'ordre de 5%, l'effort est utile pour réaliser l'accouplement. Ensuite l'effort peut être relâché.

Pour réaliser l'étanchéité de du connecteur 10 et plus précisément de la jonction entre les deux canaux 16 et 18, le connecteur 10 comprend avantageusement un ou plusieurs joints d'étanchéité disposés entre les deux parties 12 et 14. Le ou les joints sont avantageusement mis en pression par le mécanisme de verrouillage permettant l'emmanchement des deux surfaces tronconiques 20 et 24. L'effort généré par le mécanisme de verrouillage étant orienté selon l'axe 26, le ou les joints sont alors de préférence des joints toriques disposés autour de l'axe 26. Ainsi l'effort exercé par le mécanisme de verrouillage est réparti de façon uniforme sur toute la longueur du ou des joints.

Dans la première variante représentée sur les figures 1a, 1b et 2a, une gorge circulaire 50 centrée autour de l'axe 26 est réalisée dans la partie 14 et plus précisément, dans la face plane 52. Un joint torique 54 est placé dans la gorge 50. Un jeu fonctionnel est prévu entre la face 38 de la partie 12 et la face 52 de la partie 14 lors de l'emmanchement des deux surfaces tronconiques 20 et 24. Le joint 54 est dimensionné pour être pressé entre la face 38 et le fond de la gorge 50 lorsque l'emmanchement et réalisé. Il est également possible de réaliser la gorge 50 dans la face 38 et d'y placer le joint 54 qui est alors pressé par la face plane 52.

On retrouve le joint 54 dans les autres variantes décrites à l'aide des figures 2b, 2c et 2d. Tout autre type de joint s'écrasant axialement selon l'axe 26 ou même radialement autour de ce même axe peut également être mis en œuvre dans le cadre de l'invention.

Le joint 54 est disposé d'un côté du canal 18. De l'autre côté du canal 18 un second joint 56 est également disposé dans une gorge 58 réalisée dans une autre face plane 60 de la partie 14. Comme pour la face 52, la face 60 est perpendiculaire à l'axe 26. La partie 12 comprend, quant à elle, une face 62 perpendiculaire à l'axe 22 et destinée à venir en regard de la face 60. Comme précédemment, un jeu fonctionnel est prévu entre les faces 60 et 62lorsque l'emmanchement et réalisé afin de permettre la compression du joint 56 lors de l'emmanchement. Les joints 54 et 56 sont par exemple des joints élastomères ou des joints formés d'un ressort hélicoïdal à spires jointives enfermé dans une enveloppe déformable. Ce type de joint à ressort est notamment connu sous la marque : « Helicoflex » développée par la société Technetics dont le siège social est situé à Columbia, en Caroline du Sud (États-Unis d'Amérique).

La figure 5 représente une variante d'un connecteur fluidique 70 comprenant, comme précédemment deux parties. Le connecteur fluidique 70 comprend la partie 12 décrite plus haut et une partie 14a qui est identique à la partie 14 hormis la présence de deux canaux 18a et 18b. Lorsque le connecteur fluidique 70 est accouplé, les deux canaux 18a et 18b de la partie 14a communiquent avec le canal 16 de la partie 12. Il est bien entendu possible de disposer autant de canaux que nécessaire dans la partie 14a.

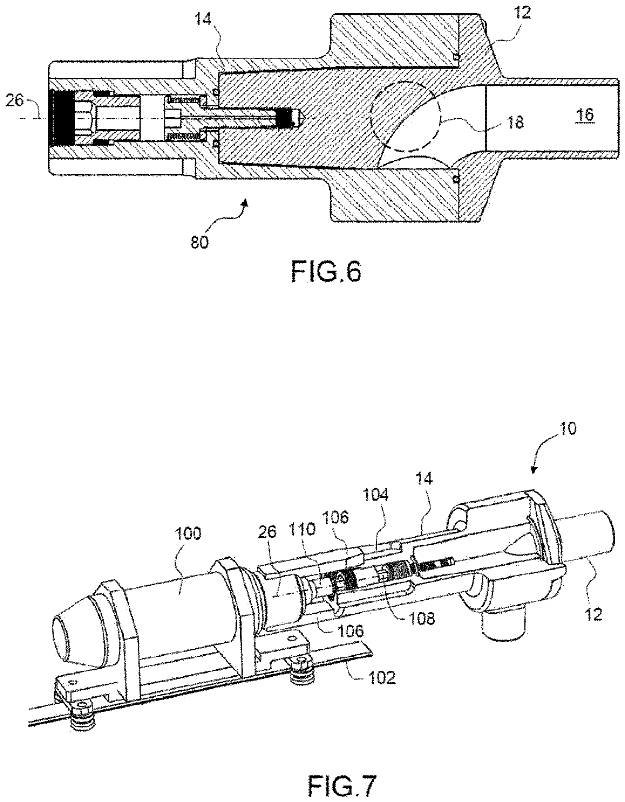

La figure 6 représente une autre variante de connecteur fluidique qui porte le repère 80. Le connecteur 80 est représenté en coupe et dans le plan de coupe aucun canal n'apparait dans la partie 14. Dans cette variante, la partie 14 comprend bien un canal 18 qui s'étend radialement dans un autre plan que le plan de coupe, par exemple à 90° du plan de coupe. L'ensemble de butées permet, dans cette variante plusieurs positions angulaires de la partie 12 par rapport à la partie 14. Une première position angulaire emmanchée de la partie 12 par rapport à la partie 14 autour de l'axe 26 permet la mise en communication des canaux 16 est telle que représentée sur la figure 2 et une seconde position angulaire emmanchée permet d'interrompre la communication entre les deux canaux 16 et 18 comme représenté sur la figure 6.

Ces positions angulaires dites ouverte et fermée peuvent également être mise en œuvre dans la variante de la figure 5 où la partie 14a comprend plusieurs canaux. Il est également possible de prévoir une ou plusieurs positions angulaires intermédiaires où la mise en communication des canaux 16 et 18 est partielle. Le connecteur fait alors office de restriction dans la circulation du fluide dans les canaux mis en communication dans le connecteur.

Lorsque les deux surfaces tronconiques sont définies pour être adhérentes lorsqu'elles sont emmanchées, une opération particulière est nécessaire pour désaccoupler le connecteur. Plus précisément, il est nécessaire d'exercer sur la partie 12 un effort opposé à celui obtenu par la vis 30 lors de son serrage. Un simple desserrage de la vis 30 ne suffit pas pour permettre le désaccouplement du connecteur du fait de l'adhérence. Cet effort opposé peut être exercé par un outil extérieur. Mais avantageusement, la seconde partie 14 comprend un extracteur 90 pouvant exercer l'effort opposé. Dans les différentes variantes représentées l'extracteur est formé d'une bague filetée coopérant avec un taraudage 92 réalisé dans le lamage 34 permettant d'accueillir la vis 30. Pour exercer l'effort opposé sur la partie 12, on peut amener l'extracteur 90 au contact ou au voisinage de la tête 32 de la vis 30. Ensuite en traversant le perçage de l'extracteur 90, on desserre la vis 30 qui en prenant appui contre l'extracteur 90 repousse la partie 12. Cette poussée permet de désemmancher les deux surfaces tronconiques 20 et 24. Pour éviter que le desserrage de la vis 30 n'entraine celui de l'extracteur 90, il est avantageux d'inverser les pas de la vis 30 et de l'extracteur 90, la vis 30 pouvant avoir un pas à droite et l'extracteur 90 à gauche ou l'inverse. Alternativement, il est possible de desserrer la vis 30 puis de serrer l'extracteur 90 qui pousse sur la tête de la vis 30. Dans les deux cas, la vis 30 prend appui sur l'extracteur 90 pour séparer les deux parties 12 et 14 en exerçant sur la partie 12 un effort de sens opposé à l'effort permettant le verrouillage du connecteur.

L'extracteur 90 est avantageusement configuré pour rendre la vis 30 imperdable. Plus précisément, la section du perçage de l'extracteur 90 est plus petite que la section de la tête 32 de la vis 30. Les sections étant définies perpendiculairement à l'axe 26. Ainsi, la tête 32 de la vis 30 reste confinée dans le lamage 34 par l'extracteur 90 même en l'absence la partie 12. L'extracteur 90 peut lui aussi être imperdable. A cet effet, on peut par exemple disposer un circlip 91 en extrémité du taraudage 92 et permettant d'éviter que l'extracteur 90 ne sorte de son taraudage 92.

Pour faciliter la manœuvre de la vis, la bague formant l'extracteur 90 est percée selon l'axe 26. Au travers du perçage, il est possible d'introduire un outil permettant de manœuvrer la vis 30. Plus précisément, la tête de la vis 30 comprend une empreinte 93 par exemple hexagonale. Un outil de forme complémentaire à l'empreinte 93 peut alors traverser l'extracteur 90 pour accéder à l'empreinte 93. La manœuvre de la vis 30 permet à la fois son serrage pour immobiliser l'emmanchement des deux surfaces tronconiques 20 et 24 et son desserrage avant manœuvre de l'extracteur 90.

Il est possible d'améliorer la sécurité de fonctionnement de la vis 30. A cet effet, on peut placer entre la tête de la vis 30 et le fond du lamage 34 un élément élastique, comme par exemple un ressort hélicoïdal 94. Ainsi lors du desserrage de la vis 30, la tête de celle-ci tend à s'éloigner de son appui contre le fond du lamage 34. Le ressort 94 présente également un avantage lors du serrage de la vis 30. Dès le début du serrage, le ressort 94 permet à la vis 30 d'exercer un effort de traction sur la partie 12 tendant à maintenir les deux surfaces tronconiques 20 et 24 emmanchées et donc le connecteur accouplé.

Pour manoeuvrer l'extracteur 90, celui-ci peut comprendre une empreinte 96 réalisé dans son perçage. Un outil adapté à cette empreinte permettra de faire tourner l'extracteur 90 dans son taraudage et donc de le faire avancer pour prendre appui sur la vis 30 ou de le faire reculer selon l'axe 26. L'empreinte 96 possède des dimensions plus importantes que celles de l'empreinte 93 de la vis 30 afin de permettre à l'outil manœuvrant la vis 30 de tourner librement dans le perçage de l'extracteur 90 sans l'entrainer.

La figure 7 représente le connecteur fluidique 10 avec un outil 100 permettant l'accouplement et le désaccouplement du connecteur 10. Cet outil est intéressant pour des téléopérations. Plus précisément, l'outil 100 permet la manœuvre de la vis 30 et de l'extracteur 90. L'outil 100 est mobile en translation le long d'un rail 102 parallèle à l'axe 26. L'outil 100 peut ainsi être éloigné du connecteur 10 ou rapproché pour permettre de manœuvrer la vis 30 et/ou l'extracteur 90.

L'outil 100 prend appui sur la partie 12 qui peut avoir une surface extérieure 104 cannelée afin de permettre à des doigts 106 d'immobiliser l'outil 100 en rotation par rapport à la partie 14 et de reprendre le couple de serrage opéré par l'outil 100. Alternativement, tout autre moyen d'immobilisation en rotation autour de l'axe 26 entre l'outil 100 et la partie 14 peut bien entendu être mis en œuvre.

L'outil possède deux empreintes 108 et 110. L'empreinte 108 est complémentaire de l'empreinte 93 de la vis 30. L'empreinte 110 est complémentaire de l'empreinte 94 de l'extracteur 90. La manœuvre des deux empreintes 108 et 110 est indépendante. L'empreinte 110 est creuse et est traversée par l'empreinte 108. Les deux empreintes 108 et 110 peuvent tourner indépendamment l'une de l'autre. L'empreinte 108 peut se déplacer en translation par rapport à l'empreinte 110 pour atteindre la vis 30 quel que soit sa position serrée ou desserrée. De plus, une rétractation de l'empreinte 108 permet à l'outil 100 de manœuvrer l'extracteur 90 sans action sur la vis 30. L'outil 100 permet de motoriser séparément en rotation les deux empreintes 108 et 110. L'outil 100 permet de motoriser en translation le long de l'axe 26 au moins l'empreinte 108. Le déplacement en translation de l'empreinte 110 peut être assuré par une motorisation interne à l'outil 100 ou par le déplacement de l'outil 100 le long du rail 102.

## Revendications

1. Connecteur fluidique destiné à permettre la circulation d'un fluide et comprenant deux parties (12, 14) configurées pour être accouplées, chacune des parties (12, 14) comprenant un canal (16, 18), les deux canaux (16, 18) communiquant lorsque les deux parties (12, 14) sont accouplées, le fluide étant destiné à être conduit par les deux canaux (16, 18), le connecteur fluidique comprenant en outre un mécanisme de verrouillage (30, 36 ; 31, 33 ; 39, 40) configuré pour prendre appui sur une première (14) des deux parties et pour exercer un effort sur une seconde des deux parties (12) afin d'assurer le maintien en position des deux parties (12, 14) entre elles lorsque les deux parties (12, 14) sont accouplées, le mécanisme de verrouillage (30, 36 ; 31, 33 ; 39, 40) comprenant un tirant (30, 31, 39) traversant une ouverture (37) de la première des deux parties (14), une première des deux parties (12, 14) comprenant une surface tronconique femelle (24 ; 68), une seconde des deux parties (12, 14) 2- comprenant une surface tronconique mâle (20 ; 67), les deux surfaces tronconiques (20, 24 ; 67, 68) étant complémentaires, un emmanchement des deux surfaces tronconiques (20, 24 ; 67, 68) permettant le positionnement des deux parties (12, 14) l'une par rapport à l'autre pour assurer la mise en communication des deux canaux (16, 18), le mécanisme de verrouillage (30) étant configuré pour exercer un effort sur la seconde partie (12) selon un axe (26) de la surface tronconique femelle (24 ; 68), **caractérisé en ce que** le tirant (30, 31, 39) exerce un effort sur le centre d'une extrémité axiale (38) de seconde partie (12), l'extrémité axiale (38) formant la section de plus petit diamètre de la surface tronconique mâle (20).

2. Connecteur fluidique selon la revendication 1, **caractérisé en ce que** le mécanisme de verrouillage comprend un tirant (30 ; 31 ; 39) occupant l'ouverture (37) au jeu fonctionnel près.

3. Connecteur fluidique selon l'une des revendications précédentes, **caractérisé en ce qu'**il comprend un joint d'étanchéité (54) séparant les canaux (16, 18) de l'ouverture (37).

4. Connecteur fluidique selon l'une des revendications précédentes, **caractérisé en ce que** le mécanisme de verrouillage comprend une vis (30) dont une tête (32) s'appuie sur la première partie (14), la vis (30) traversant l'ouverture (37) et coopérant avec un taraudage (36) réalisé dans une extrémité axiale (38) de la seconde partie (12).

5. Connecteur fluidique selon l'une des revendications 1 à 3, **caractérisé en ce que** le mécanisme de verrouillage comprend une tige filetée (31) prolongeant la première partie (12) à partir d'une extrémité axiale (38) de la première la première partie (12), et un écrou (33) coopérant avec la tige filetée (31) et prenant appui sur la première partie (14).

6. Connecteur fluidique selon la revendication 4, **caractérisé en ce que** la vis (30) s'étend selon l'axe (26) de la surface tronconique femelle (24), et **en ce que** le taraudage (36) est réalisé dans une extrémité axiale (38) de la seconde partie (12), extrémité formant la section de plus petit diamètre de la surface tronconique mâle (20).

7. Connecteur fluidique selon la revendication 5, **caractérisé en ce que** la tige filetée (31) s'étend selon un axe (22) de la surface tronconique mâle (20) à partir d'une extrémité axiale (38) de la seconde partie (12), extrémité formant la section de plus petit diamètre de la surface tronconique mâle (20).

8. Connecteur fluidique selon l'une des revendications 1 à 3, **caractérisé en ce que** le mécanisme de verrouillage (39, 40) comprend une tige (39) s'étendant selon l'axe (22) à partir de l'extrémité axiale (38) et une manette (40) liaison pivot avec la tige (39), la manette 40 possèdant une forme excentrique par rapport à l'axe de la liaison pivot configurée pour prendre appui contre la première partie (14) et tirer sur la tige (39) lors de la rotation de la manette (40).

9. Connecteur fluidique selon l'une des revendications précédentes, **caractérisé en ce que** les deux surfaces tronconiques (20, 24) possèdent un angle au sommet défini pour assurer une auto adhérence des deux surfaces tronconiques (20, 24) une fois emmanchées et **en ce que** la seconde partie (14) comprend un extracteur (90) pouvant exercer un effort opposé à la traction permettant le désaccouplement des deux parties (12, 14).

10. Connecteur fluidique selon la revendication 9 en tant que revendication dépendante de la revendication 4, **caractérisé en ce que** la vis (30) est configurée pour s'appuyer sur l'extracteur (90) afin d'exercer sur la première partie (12) un effort orienté de façon à découpler les deux surfaces tronconiques (20, 24).

11. Connecteur fluidique selon la revendication 10, **caractérisé en ce que** la vis (30) prend appui sur la seconde partie (14) par l'intermédiaire d'un élément élastique (94) tendant à éloigner la vis (30) de son appui, après dévissage de la vis (30) du taraudage (36) de la première partie (12).

12. Connecteur fluidique selon l'une des revendications 10 à 11, **caractérisé en ce que** l'extracteur (90) est configuré pour rendre la vis (30) imperdable.

13. Connecteur fluidique selon l'une des revendications 6 à 12, **caractérisé en ce que** les deux surfaces tronconiques (20, 24) sont de révolution chacune autour d'un axe (22, 26), les axes des deux surfaces tronconiques étant confondus une fois les deux parties (12, 14) du connecteur (10) accouplées et **en ce que** le connecteur fluidique (10) comprend un ensemble de butées angulaires (42, 44, 46, 48) configuré pour définir au moins une orientation des deux parties (12, 14) autour des axes confondus (22, 26).

14. Connecteur fluidique selon la revendication 13, **caractérisé en ce que** l'ensemble de butées angulaires (42, 44, 46, 48) est configuré pour définir plusieurs orientations angulaires des deux parties (12, 14) autour des axes confondus (22, 26), une des orientations permettant de mettre en communication les deux canaux (16, 18), une autre des orientations permettant d'interrompre la communication des deux canaux (16, 18).

## Patentansprüche

1. Fluidverbinder, der zum Zulassen der Zirkulation eines Fluids bestimmt ist und zwei zum Koppeln miteinander konfigurierte Teile (12, 14) umfasst, wobei jedes der Teile (12, 14) einen Kanal (16, 18) umfasst, wobei die beiden Kanäle (16, 18) miteinander in Verbindung stehen, wenn die beiden Teile (12, 14) gekoppelt sind, wobei das Fluid durch die beiden Kanäle (16, 18) geleitet werden soll, wobei der Fluidverbinder ferner einen Verriegelungsmechanismus (30, 36; 31, 33; 39, 40) umfasst, konfiguriert zum Anliegen an einem ersten (14) der beiden Teile und zum Ausüben einer Kraft auf ein zweites der beiden Teile (12), um das Halten der Position der beiden Teile (12, 14) relativ zueinander zu gewährleisten, wenn die beiden Teile (12, 14) gekoppelt sind, wobei der Verriegelungsmechanismus (30, 36; 31, 33; 39, 40) einen Zugstab (30, 31, 39) umfasst, der durch eine Öffnung (37) des ersten der beiden Teile verläuft (14), wobei ein erstes der beiden Teile (12, 14) eine kegelstumpfförmige Innenfläche (24; 68) und ein zweites der beiden Teile (12, 14) eine kegelstumpfförmige Außenfläche (20; 67) aufweist, wobei die beiden kegelstumpfförmigen Flächen (20, 24; 67, 68) komplementär sind, wobei ein Zusammenstecken der beiden kegelstumpfförmigen Flächen (20, 24; 67, 68) das Positionieren der beiden Teile (12, 14) relativ zueinander ermöglicht, um das In-Verbindung-Bringen der beiden Kanäle (16, 18) zu gewährleisten, wobei der Verriegelungsmechanismus (30) zum Ausüben einer Kraft auf das zweite Teil (12) entlang einer Achse (26) der kegelstumpfförmigen Innenfläche (24; 68) konfiguriert ist, **dadurch gekennzeichnet, dass** der Zugstab (30, 31, 39) eine Kraft auf die Mitte eines axialen Endes (38) des zweiten Teils (12) ausübt, wobei das axiale Ende (38) den Abschnitt mit dem kleinsten Durchmesser der kegelstumpfförmigen Außenfläche (20) bildet.

2. Fluidverbinder nach Anspruch 1, **dadurch gekennzeichnet, dass** der Verriegelungsmechanismus einen Zugstab (30; 31; 39) umfasst, der die Öffnung (37) mit Ausnahme des funktionalen Spiels einnimmt.

3. Fluidverbinder nach einem der vorhergehenden Ansprüche, **dadurch gekennzeichnet, dass** er eine Dichtung (54) umfasst, die die Kanäle (16, 18) von der Öffnung (37) trennt.

4. Fluidverbinder nach einem der vorhergehenden Ansprüche, **dadurch gekennzeichnet, dass** der Verriegelungsmechanismus eine Schraube (30) umfasst, deren Kopf (32) auf dem ersten Teil (14) aufliegt, wobei die Schraube (30) durch die Öffnung (37) verläuft und mit einem Innengewinde (36) zusammenwirkt, das in einem axialen Ende (38) des zweiten Teils (12) ausgebildet ist.

5. Fluidverbinder nach einem der Ansprüche 1 bis 3, **dadurch gekennzeichnet, dass** der Verriegelungsmechanismus einen Gewindestab (31), der den ersten Teil (12) von einem axialen Ende (38) des ersten Teils (12) verlängert, und eine Mutter (33) umfasst, die mit dem Gewindestab (31) zusammenwirkt und am ersten Teil (14) anliegt.

6. Fluidverbinder nach Anspruch 4, **dadurch gekennzeichnet, dass** sich die Schraube (30) entlang der Achse (26) der kegelstumpfförmigen Innenfläche (24) erstreckt, und dadurch, dass das Innengewinde (36) in einem axialen Ende (38) des zweiten Teils (12) ausgebildet ist, wobei das Ende den Abschnitt mit dem kleinsten Durchmesser der kegelstumpfförmigen Außenfläche (20) bildet.

7. Fluidverbinder nach Anspruch 5, **dadurch gekennzeichnet, dass** sich der Gewindestab (31) entlang einer Achse (22) der kegelstumpfförmigen Außenfläche (20) von einem axialen Ende (38) des zweiten Teils (12) erstreckt, wobei das Ende den Abschnitt mit dem kleinsten Durchmesser der kegelstumpfförmigen Außenfläche (20) bildet.

8. Fluidverbinder nach einem der Ansprüche 1 bis 3, **dadurch gekennzeichnet, dass** der Verriegelungsmechanismus (39, 40) einen sich vom axialen Ende (38) entlang der Achse (22) erstreckenden Stab (39) und einen mit dem Stab (39) schwenkbar verbundenen Handgriff (40) umfasst, wobei der Handgriff (40) eine exzentrische Form in Bezug auf die Achse der Schwenkverbindung aufweist, die zum Anliegen am ersten Teil (14) und zum Ziehen am Stab (39) beim Drehen des Handgriffs (40) konfiguriert ist.

9. Fluidverbinder nach einem der vorhergehenden Ansprüche, **dadurch gekennzeichnet, dass** die beiden kegelstumpfförmigen Flächen (20, 24) einen Scheitelwinkel aufweisen, der zum Gewährleisten einer Selbsthaftung der beiden kegelstumpfförmigen Flächen (20, 24) nach dem Zusammenstecken definiert ist, und dadurch, dass der zweite Teil (14) einen Auszieher (90) umfasst, der eine Kraft entgegen der Zugkraft ausüben kann, die das Entkoppeln der beiden Teile (12, 14) zulässt.

10. Fluidverbinder nach Anspruch 9 in Abhängigkeit von Anspruch 4, **dadurch gekennzeichnet, dass** die Schraube (30) zum Anliegen an dem Auszieher (90) konfiguriert ist, um eine Kraft auf den ersten Teil (12) auszuüben, die zum Entkoppeln der beiden kegelstumpfförmigen Flächen (20, 24) orientiert ist.

11. Fluidverbinder nach Anspruch 10, **dadurch gekennzeichnet, dass** die Schraube (30) über ein elastisches Element (94) auf dem zweiten Teil (14) aufliegt, das dazu neigt, die Schraube (30) nach ihrem Abschrauben vom Innengewinde (36) des ersten Teils (12) von ihrer Auflage zu entfernen.

12. Fluidverbinder nach einem der Ansprüche 10 bis 11, **dadurch gekennzeichnet, dass** der Auszieher (90) zum Unverlierbarmachen der Schraube (30) konfiguriert ist.

13. Fluidverbinder nach einem der Ansprüche 6 bis 12, **dadurch gekennzeichnet, dass** die beiden kegelstumpfförmigen Flächen (20, 24) jeweils um eine Achse (22, 26) rotationssymmetrisch sind, wobei die Achsen der beiden kegelstumpfförmigen Flächen zusammenfallen, wenn die beiden Teile (12, 14) des Verbinders (10) gekoppelt sind, und dadurch, dass der Fluidverbinder (10) einen Satz von Winkelanschlägen (42, 44, 46, 48) umfasst, die zum Definieren mindestens einer Orientierung der beiden Teile (12, 14) um die zusammenfallenden Achsen (22, 26) konfiguriert sind.

14. Fluidverbinder nach Anspruch 13, **dadurch gekennzeichnet, dass** der Satz von Winkelanschlägen (42, 44, 46, 48) zum Definieren mehrerer Winkelorientierungen der beiden Teile (12, 14) um die zusammenfallenden Achsen (22, 26) konfiguriert ist, wobei eine der Orientierungen das In-Verbindung-Bringen der beiden Kanäle (16, 18) zulässt, wobei eine andere der Orientierungen das Unterbrechen der Verbindung der beiden Kanäle (16, 18) zulässt.

## Claims

1. A fluidic connector intended to enable the circulation of a fluid and comprising two parts (12, 14) configured to be coupled, each of the parts (12, 14) comprising a channel (16, 18), the two channels (16, 18) communicating when the two parts (12, 14) are coupled, the fluid being intended to be conveyed by the two channels (16, 18), the fluidic connector further comprising a locking mechanism (30, 36 ; 31, 33 ; 39, 40) configured to bear on a first (14) of the two parts and to exert a force on a second of the two parts (12) in order to hold the two parts (12, 14) in position relative to one another when the two parts (12, 14) are coupled, the locking mechanism (30, 36 ; 31, 33 ; 39, 40) comprising a tie rod (30, 31,39) passing through an opening (37) of the first of the two parts (14), a first of the two parts (12, 14) comprising a female frustoconical surface (24 ; 68), a second of the two parts (12, 14) comprising a male frustoconical surface (20 ; 67), the two frustoconical surfaces (20, 24 ; 67, 68) being complementary, a fitting of the two frustoconical surfaces (20, 24 ; 67, 68) allowing the positioning of the two parts (12, 14) relative to each other to ensure the communication of the two channels (16, 18), the locking mechanism (30) being configured to exert a force on the second part (12) along an axis (26) of the female frustoconical surface (24 ; 68), **characterized in that** the tie rod (30, 31, 39) exerts a force on the center of an axial end (38) of the second part (12), the axial end (38) forming the smaller section diameter of the male frustoconical surface (20).

2. The fluidic connector according to Claim 1, **characterized in that** the locking mechanism comprises a tie-rod (30 ; 31 ; 39) occupying the opening (37) apart from the functional clearance.

3. The fluidic connector according to any of the preceding claims, **characterized in that** it comprises a seal (54) separating the channels (16, 18) from the opening (37).

4. The fluidic connector according to any of the preceding claims, **characterized in that** the locking mechanism comprises a screw (30) a head of which (32) bears on the first part (14) , the screw (30) passing through the opening (37) and cooperating with an internal thread (36) produced in an axial end (38) of the second part (12).

5. The fluidic connector according to any of the claims 1 to 3, **characterized in that** the locking mechanism comprises a threaded rod (31) extending the first part (12) from an axial end (38) of the first part (12), and a nut (33) cooperating with the threaded rod (31) and bearing on the first part (14).

6. The fluidic connector according to Claim 4, **characterized in that** the screw (30) extends along the axis (26) of the female frustoconical surface (24) and **in that** the internal thread (36) is produced in an axial end (38) of the second part (12) forming the smallest diameter section of the male frustoconical surface (20).

7. The fluidic connector according to Claim 5, **characterized in that** the threaded rod (31) extends along an axis (22) of the male frustoconical surface (20) from an axial end (38) of the second part (12) forming the smallest diameter section of the male frustoconical surface (20).

8. The fluidic connector according to one of claims 1 to 3, **characterized in that** the locking mechanism (39, 40) comprises a rod (39) extending along the axis (22) from the axial end (38) and a lever (40) pivotally coupled to the rod (39), the lever (40) having an eccentric shape with respect to the axis of the pivot connection configured to bear against the first part (14) and pull on the rod (39) when rotating the lever (40).

9. The fluidic connector according to one of the preceding claims, **characterized in that** the two frustoconical surfaces (20, 24) have an angle at the apex defined to provide self-adhesion of the two frustoconical surfaces (20, 24) once fitted together and **in that** the second part (14) comprises an extractor (90) able exert a force opposite the traction enabling decoupling of the two parts (12, 14).

10. A fluidic connector according to claim 9 as a dependent claim of claim 4, **characterized in that** the screw (30) is configured to bear on the extractor (90) in order to exert on the first part (12) a force oriented in such a manner as to decouple the two frustoconical surfaces (20, 24).

11. Fluidic connector according to Claim 10, **characterized in that** the screw (30) bears on the second part (14) by means of an elastic element (94) tending to move the screw (30) away from its seat, after unscrewing the screw (30) from the internal thread (36) of the first part (12).

12. Fluidic connector according to any of claims 10 to 11, **characterized in that** the extractor (90) is configured to render the screw (30) captive.

13. Fluidic connector according to any of claims 6 to 12, **characterized in that** the two frustoconical surfaces (20, 24) are each a surface of revolution about an axis (22, 26), the axes of the two frustoconical surfaces coinciding once the two parts (12, 14) of the connector (10) are coupled and **in that** the fluidic connector (10) comprises a set of angular abutments (42, 44, 46, 48) configured to define at least one orientation of the two parts (12, 14) about the coincident axes (22, 26).

14. Fluidic connector according to claim 13, **characterized in that** the set of angular abutments (42, 44, 46, 48) is configured to define multiple angular orientations of the two parts (12, 14) about the coincident axes (22, 26), one of the orientations enabling communication to be established between the two channels (16, 18), another of the orientations enabling interruption of the communication between the two channels (16, 18).
